# EUROPÄISCHE PATENTSCHRIFT

(11) **EP 1 584 888 B1**
(45) Veröffentlichungstag und Bekanntmachung des Hinweises auf die Patenterteilung: **06.05.2009**
(21) Anmeldenummer: 05004237.3
(22) Anmeldetag: 26.02.2005
(51) Int. Cl.: F42B 14/06

(54) **Verfahren zur Herstellung eines segmentierten Treibkäfigs für ein unterkalibriges Wuchtgeschoss**
Method of manufacturing a segmented sabot for a sub-calibre kinetic energy projectile
Procédé de fabrication pour un sabot segmenté pour projectile sous-calibre à énergie cinétique

(30) Priorität: 10.04.2004 DE 102004017675
(43) Veröffentlichungstag der Anmeldung: 12.10.2005
(73) Patentinhaber: Rheinmetall Waffe Munition GmbH, 29345 Unterlüss (DE)
(72) Erfinder: Kolodzey, Jürgen, 29328 Fassberg (DE); Vagedes, Michael, 29320 Hermannsburg (DE)
(74) Vertreter: Dietrich, Barbara

(56) Entgegenhaltungen:
- DE-A1- 19 944 376
- FR-A- 2 690 240
- US-A- 4 351 094

## Beschreibung

Die Erfindung betrifft ein Verfahren zur Herstellung eines segmentierten Treibkäfigs für ein vorzugsweise großkalibriges unterkalibriges Wuchtgeschoss nach dem Oberbegriff des Anspruchs 1.

Ein derartiger Treibkäfig ist aus der DE 199 44 376 A1 bekannt. Er besteht im wesentlichen aus einem entsprechend segmentierten Grundkörper aus einem Leichtmetall sowie einer heckseitigen und einer vorderseitigen Abstützung. Während die heckseitige Abstützung als geschlossener Flansch ausgebildet ist, umfaßt die vorderseitige Abstützung zur Reduzierung des Gewichtes des Treibkäfigs mehrere gleichmäßig über den Umfang des Treibkäfigs verteilt angeordnete, durch Luftstromöffnungen voneinander getrennte radiale Stege aus Kunststoff, die außenseitig über einen mit Sollbruchstellen versehenen, ebenfalls aus Kunststoff bestehenden, umlaufenden Ring miteinander verbunden sind. Über die Art der Befestigung der Stege der vorderen Abstützung des Treibkäfigs an dem Grundkörper macht die vorstehend erwähnte Druckschrift keinerlei näheren Angaben. Vielmehr wird lediglich allgemein erwähnt, dass der Ring mit den Stegen auch auf den Grundkörper aufgespritzt werden kann.

Aus der DE 33 14 749 A1 ist ein Treibkäfig für unterkalibrige Geschosse bekannt, welcher vorderseitig ebenfalls eine aus mehreren gleichmäßig über den Umfang des Treibkäfigs verteilt angeordnete, durch Luftstromöffnungen voneinander getrennte radiale Stege umfaßt. Dabei können die radialen Stege entweder einstückig mit dem Grundkörper verbunden sein oder als separate Kunststoffteile gefertigt werden, die in schwalbenschwanzähnliche Nuten der einzelnen Segmente des Grundkörpers eingeschoben werden.

Schließlich ist auch aus der DE 42 06 217 C2 ein Treibkäfig für unterkalibrige Geschosse bekannt, welcher vorderseitig eine aus mehreren gleichmäßig über den Umfang des Treibkäfigs verteilt angeordnete radiale Stege umfaßt. Bei diesem bekannten Treibkäfig sind die radialen Stege einstückig mit dem Grundkörper verbunden.

Nachteilig ist bei den bekannten Treibkäfigen unter anderem, dass ihre Fertigung, insbesondere bei einstückiger Ausgestaltung von Grundkörper und Abstützung, sehr arbeits- und damit auch kostenaufwendig ist, so dass entsprechende Treibkäfige für eine Serienfertigung nicht geeignet erscheinen.

Ausgehend von der DE 199 44 376 A1 liegt der Erfindung die Aufgabe zugrunde, ein Verfahren zur Herstellung eines segmentierten Treibkäfigs der eingangs erwähnten Art anzugeben, welches kostengünstiger ist als bekannte vergleichbare Verfahren, ohne dass dadurch die Treffgenauigkeit des entsprechenden Geschosses nachteilig beeinflußt wird.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im wesentlichen auf dem Gedanken, den Grundkörper mit Befestigungslaschen zu versehen, die zur Bildung der Stege in einem entsprechenden Spritzwerkzeug vollständig mit Kunststoff umspritzt werden. Um eine sichere formschlüssige Verbindung zwischen den Befestigungslaschen und den aus Kunststoff bestehenden Stegen zu erzielen, hat es sich als vorteilhaft erwiesen, wenn die Befestigungslaschen mit sich quer zur axialen Richtung erstreckenden Öffnungen und/oder Profilierungen versehen werden.

Als Profilierungen der Befestigungslaschen können beispielsweise T- oder schwalbenschwanzförmige Erhebungen verwendet werden.

Vorzugsweise werden die Stege auf die einzelnen Segmente des Grundkörpers aufgespritzt und erst anschließend die mit den Stegen versehenen Segmente zur Bildung des Treibkäfigs miteinander verbunden. Denkbar ist allerdings auch, dass die Stege auf den vormontierten Treibkäfig aufgespritzt werden.

Sofern auch der die Stege außenseitig verbindende Ring aus Kunststoff besteht, hat es sich als zweckmäßig erwiesen, wenn mit dem Aufspritzen der Stege gleichzeitig auch der Ring durch Spritzgießen hergestellt wird.

Allerdings kann der mit Sollbruchstellen versehene Ring auch separat hergestellt und mit den an dem Grundkörper angespritzten Stegen form- oder kraftschlüssig, insbesondere durch Kleben, Schrauben oder Nieten, verbunden werden. Eine derartige separate Herstellung des Ringes und seine anschließende Verbindung mit den Stegen wird vor allem dann in Frage kommen, wenn der Ring aus einem Leichtmetall oder einer Leichtmetall-Legierung besteht.

Als Material für die Stege und/oder den Ring haben sich insbesondere kohlefaserverstärkte Kunststoffe (Thermoplaste oder Polyamide, vorzugsweise Polyamid 12) bewährt.

Weitere Einzelheiten und Vorteile der Erfindung ergeben sich aus den folgenden anhand von Figuren erläuterten Ausführungsbeispielen. Es zeigen:
Fig.1 einen Längsschnitt durch einen erfindungsgemäßen Treibkäfig und
Fig.2 eine Ansicht des in Fig.1 dargestellten Treibkäfigs von vorne.

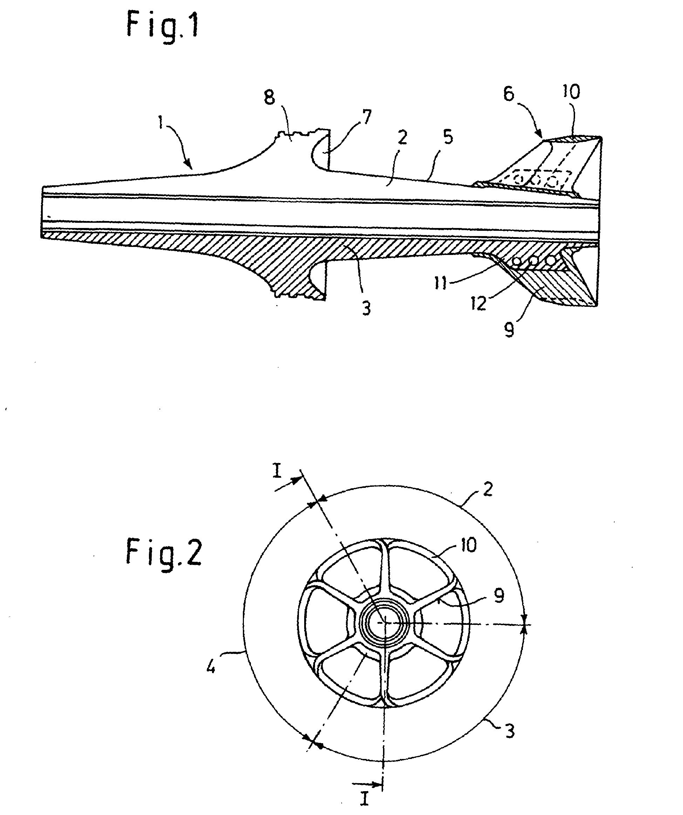

In den Fig.1 und 2 ist mit 1 ein aus drei Segmenten 2-4 bestehender erfindungsgemäßer Treibkäfig für ein unterkalibriges Wuchtgeschoss (nicht dargestellt) bezeichnet. Der Treibkäfig 1 umfaßt einen entsprechend segmentierten und aus Aluminium bestehenden Grundkörper 5, der eine vordere Abstützung 6 und eine hintere mit einer Lufttasche 7 versehene Abstützung 8 aufweist.

Die vordere an dem Grundkörper 5 befestigte Abstützung 6 setzt sich aus sechs gleichmäßig über den Umfang des Treibkäfigs 1 verteilt angeordnete, aus einem kohlenfaserverstärkten Kunststoff bestehenden Stege 9 zusammen. Dabei sind jedem der drei Segmente 2-4 zwei Stege 9 zugeordnet, die außenseitig über einen ebenfalls aus Kunststoff bestehenden Abschnitt eines Ringes 10 miteinander verbunden sind.

Wie Fig.1 entnehmbar ist, ist der Grundkörper 5 vorderseitig mit sich in axialer Richtung erstreckende Befestigungslaschen 11 versehen, welche jeweils drei sich quer zur axialen Richtung erstreckende Bohrungen 12 aufweisen. Zur Herstellung der Stege 9 werden die Befestigungslaschen 11 vollständig mit Kunststoff (CFK oder GFK) umspritzt, wobei die Spritzwerkzeuge (nicht dargestellt) derart gewählt werden, dass sowohl die Stege 9 als auch der außenseitig angeordnete Ring 10 gleichzeitig hergestellt werden und sich somit eine einstückige Verbindung zwischen den Stegen 9 und dem entsprechenden Abschnitt des Ringes 10 ergeben.

Als Material für die Stege 9 und den Ring 10 kann jeder spritzgießfähige Kunststoff hoher Festigkeit und geringer Feuchtigkeitsaufnahme verwendet werden. Insbesondere hat sich das im Handel erhältliche Vestamid L-CF15 (Thermoplast, Polyamid 12 mit 15% Kohlefasern verstärkt) bewährt.

Das Umspritzen der Befestigungslaschen 11 kann segmentweise erfolgen, so dass dann die mit den angespritzten Stegen 9 versehenen Segmente 2-4 des Grundkörpers 5 anschließend miteinander verbunden und die äußere Oberfläche des zusammengesetzten Treibkäfigs 1 dann überarbeitet werden. Es kann aber auch ein Umspritzen der Befestigungslaschen 11 des vollständig vormontierten Grundkörpers 5 erfolgen.

Die Erfindung ist selbstverständlich nicht auf die vorstehend beschriebenen Verfahren beschränkt. So kann beispielsweise der mit Sollbruchstellen versehene Ring auch separat hergestellt und erst anschließend mit den an dem Grundkörper angespritzten Stegen form- oder kraftschlüssig verbunden werden. Dabei kann der Ring statt aus einem kohlefaserverstärkten Kunststoff auch aus einem Leichtmetall oder einer Leichtmetall-Legierung bestehen, wobei vorzugsweise im Bereich der Trennstellen benachbarter Segmente des Grundkörpers Sollbruchstellen vorgesehen sind.

### Bezugszeichenliste

- 1: Treibkäfig
- 2-4: Segmente
- 5: Grundkörper
- 6: vordere Abstützung
- 7: Lufttasche
- 8: hintere Abstützung
- 9: Steg
- 10: Ring
- 11: Befestigungslasche
- 12: Öffnungen, Bohrung

## Patentansprüche

1. Verfahren zur Herstellung eines segmentierten Treibkäfigs (1) für ein unterkalibriges Wuchtgeschoss, der einen entsprechend segmentierten Grundkörper (5) und eine vordere an dem Grundkörper (5) befestigte Abstützung (6) aufweist, die gleichmäßig über den Umfang des Treibkäfigs (1) verteilt angeordnete, aus Kunststoff bestehende Stege (9) umfaßt, welche außenseitig über einen umlaufenden Ring (10) miteinander verbunden sind, **dadurch gekennzeichnet,**
**dass** jedes der Segmente (2-4) des Grundkörpers (5) vorderseitig mit mindestens einer sich in axialer Richtung erstreckenden Befestigungslasche (11) versehen wird, und
**dass** die Befestigungslaschen (11) zur Bildung der Stege (9) in einem entsprechenden Spritzwerkzeug vollständig mit Kunststoff umspritzt werden.

2. Verfahren nach Anspruch 1, **dadurch gekennzeichnet, dass** die Befestigungslaschen (11) sich quer zur axialen Richtung des Treibkäfigs (1) erstreckende Öffnungen (12) und/oder Profilierungen aufweisen.

3. Verfahren nach Anspruch 2, **dadurch gekennzeichnet, dass** als Profilierungen der Befestigungslaschen (11) T- oder schwalbenschwanzförmige Erhebungen verwendet werden.

4. Verfahren nach einem der Ansprüche 1 bis 3, **dadurch gekennzeichnet, dass** das Umspritzen der Befestigungslaschen (11) segmentweise erfolgt, und dass dann die mit den angespritzten Stegen (9) versehenen Segmente (2-4) des Grundkörpers (5) miteinander verbunden werden.

5. Verfahren nach einem der Ansprüche 1 bis 3, **dadurch gekennzeichnet, dass** zunächst die Segmente (2-4) des Grundkörpers (5) miteinander verbunden werden und dass erst anschließend die Befestigungslaschen (11) zwecks Bildung der Stege (9) mit Kunststoff in einem geeigneten Spritzwerkzeug umspritzt werden.

6. Verfahren nach einem der Ansprüche 1 bis 5, **dadurch gekennzeichnet, dass** mit dem Umspritzen der Stege (9) gleichzeitig auch der aus Kunststoff bestehende Ring (10) außenseitig auf die Stege (9) aufgespritzt wird.

7. Verfahren nach einem der Ansprüche 1 bis 5, **dadurch gekennzeichnet, dass** der mit Sollbruchstellen versehene Ring (10) separat hergestellt wird und mit den an dem Grundkörper (5) angespritzten Stegen (9) form- oder kraftschlüssig verbunden wird.

8. Verfahren nach Anspruch 7, **dadurch gekennzeichnet, dass** der Ring (10) aus Kunststoff besteht und durch Spritzgießen hergestellt wird.

9. Verfahren nach Anspruch 7, **dadurch gekennzeichnet, dass** der Ring (10) aus einem Leichtmetall oder einer Leichtmetall-Legierung besteht.

10. Verfahren nach einem der Ansprüche 1 bis 9, **dadurch gekennzeichnet, dass** die Stege (9) aus kohlefaserverstärktem Kunststoff bestehen.

## Claims

1. Method for production of a segmented discarding sabot (1) for a sub-calibre kinetic-energy projectile, which has a correspondingly segmented base body (5) and a front support (6) which is attached to the base body (5) and comprises webs (9) which are composed of plastic, are arranged distributed uniformly over the circumference of the discarding sabot (1) and are connected to one another on the outside via a circumferential ring (10), **characterized**
**in that** each of the segments (2-4) of the base body (5) is provided at the front end with at least one attachment lug (11) which extends in the axial direction, and
**in that** the attachment lugs (11) are completely extrusion-coated with plastic in order to form the webs (9), in an appropriate spraying mould.

2. Method according to Claim 1, **characterized in that** the attachment lugs (11) have openings (12) and/or profiles which extend transversely with respect to the axial direction of the discarded sabot (1).

3. Method according to Claim 2, **characterized in that** T-shaped or dovetail-shaped projections are used as profiles for the attachment lugs (11).

4. Method according to one of Claims 1 to 3, **characterized in that** the extrusion coating of the attachment lugs (11) is carried out in segments, and **in that** those segments (2-4) of the base body (5) which are provided with the sprayed-on webs (9) are then connected to one another.

5. Method according to one of Claims 1 to 3, **characterized in that** the segments (2-4) of the base body (5) are first of all connected to one another, and **in that** only then are the attachment lugs (11) extrusion-coated with plastic in a suitable spraying mould, in order to form the webs (9).

6. Method according to one of Claims 1 to 5, **characterized in that** the ring (10), which is composed of plastic, is also sprayed externally onto the webs (9) at the same time as the extrusion-coating of the webs (9).

7. Method according to one of Claims 1 to 5, **characterized in that** the ring (10), which is provided with weak points, is produced separately and is connected in an interlocking and force-fitting manner to the webs (9) which are sprayed on the base body (5).

8. Method according to Claim 7, **characterized in that** the ring (10) is composed of plastic and is produced by injection moulding.

9. Method according to Claim 7, **characterized in that** the ring (10) is composed of light metal or a light-metal alloy.

10. Method according to one of Claims 1 to 9, **characterized in that** the webs (9) are composed of carbon-fibre reinforced plastic.

## Revendications

1. Procédé de fabrication d'un sabot segmenté (1) pour projectile sous-calibré à énergie cinétique, qui présente un corps de base (5) segmenté de manière correspondante et un support (6) fixé de préférence au corps de base (5), qui comprend des nervures en plastique réparties uniformément sur la périphérie du sabot (1), lesquelles sont connectées les unes aux autres du côté extérieur par le biais d'une bague périphérique (10), **caractérisé en ce que**
chacun des segments (2-4) du corps de base (5) est pourvu du côté avant d'au moins une patte de fixation (11) s'étendant dans la direction axiale, et
**en ce que** les pattes de fixation (11) sont complètement surmoulées avec une plastique pour former les nervures (9) dans un outil de pulvérisation correspondant.

2. Procédé selon la revendication 1, **caractérisé en ce que** les pattes de fixation (11) présentent des ouvertures (12) et/ou des profilages s'étendant transversalement à la direction axiale du sabot (1).

3. Procédé selon la revendication 2, **caractérisé en ce que** l'on utilise comme profilages des pattes de fixation (11) des rehaussements en forme de T ou de queue d'aronde.

4. Procédé selon l'une quelconque des revendications 1 à 3, **caractérisé en ce que** le surmoulage des pattes de fixation (11) s'effectue par segments, et **en ce qu'**ensuite les segments (2-4) du corps de base (5), pourvus des nervures moulées (9), sont connectés les uns aux autres.

5. Procédé selon l'une quelconque des revendications 1 à 3, **caractérisé en ce que** les segments (2-4) du corps de base (5) sont d'abord connectés les uns aux autres et **en ce que** seulement ensuite les pattes de fixation (11) sont surmoulées avec du plastique dans un outil de pulvérisation approprié afin de former les nervures (9).

6. Procédé selon l'une quelconque des revendications 1 à 5, **caractérisé en ce que** conjointement au surmoulage des nervures (9), la bague (10) constituée de plastique est également pulvérisée du côté extérieur sur les nervures (9).

7. Procédé selon l'une quelconque des revendications 1 à 5, **caractérisé en ce que** la bague (10) pourvue de points de rupture est fabriquée séparément et est connectée par engagement par correspondance géométrique et/ou par force aux nervures (9) moulées sur le corps de base (5).

8. Procédé selon la revendication 7, **caractérisé en ce que** la bague (10) se compose de plastique et est fabriquée par moulage par injection.

9. Procédé selon la revendication 7, **caractérisé en ce que** la bague (10) est constituée d'un métal léger ou d'un alliage de métaux légers.

10. Procédé selon l'une quelconque des revendications 1 à 9, **caractérisé en ce que** les nervures (9) se composent de plastique renforcé par des fibres de carbone.
